(19) Europäisches Patentamt
European Patent Office
Office européen des brevets

(11) **EP 4 682 921 A1**

(12) **EUROPEAN PATENT APPLICATION**
published in accordance with Art. 153(4) EPC

(43) Date of publication:
**21.01.2026 Bulletin 2026/04**

(21) Application number: **23927510.0**

(22) Date of filing: **16.03.2023**

(51) International Patent Classification (IPC):
**H01H 9/54** (2006.01)    **H02H 3/087** (2006.01)
**H01H 33/59** (2006.01)    **H02J 1/00** (2026.01)

(52) Cooperative Patent Classification (CPC):
**H01H 9/54; H01H 33/59; H02H 3/087; H02J 1/00**

(86) International application number:
**PCT/JP2023/010299**

(87) International publication number:
**WO 2024/189891 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Mitsubishi Electric Corporation Tokyo 100-8310 (JP)**

(72) Inventors:
• **PAGE, Frederick**
 **Tokyo 100-8310 (JP)**
• **INAGAKI, Takashi**
 **Tokyo 100-8310 (JP)**

(74) Representative: **Witte, Weller & Partner Patentanwälte mbB**
 **Postfach 10 54 62**
 **70047 Stuttgart (DE)**

(54) **DC CIRCUIT BREAKER**

(57) A DC circuit breaker (100) connected in series to a DC reactor (25) with respect to an electric line (30) includes N (N being an integer not smaller than 2) circuit breaker units (101 to 10N) connected in series and a controller (105). Each of the circuit breaker units (101 to 10N) includes a circuit breaker and an arrester connected in parallel. When the controller (105) senses an interruption command (Strp) to the DC circuit breaker (100), it generates opening commands (S1 to SN) to M (M being an integer not smaller than 1 and not larger than N) circuit breaker units among the N circuit breaker units (101 to 10N). A value of M is variably set based on at least one of a voltage on an electric line side and a voltage on a bus side of a series circuit (150) composed of the DC reactor (25) and the N circuit breaker units (101 to 10N).

FIG.10

**Description**

TECHNICAL FIELD

The present disclosure relates to a DC circuit breaker.

BACKGROUND ART

With rapid worldwide prevalence of offshore wind power generation and need for long-distance power transport from a power generation area to a demand area or the like, multi-terminal high-voltage direct-current (HVDC) power transmission has attracted attention. In multi-terminal HVDC power transmission, in order to prevent large-scale power failure on the occurrence of a system fault, a DC circuit breaker (DCCB) should disconnect a line where the fault has occurred from a normal line.

For example, Japanese Patent Laying-Open No. 62-113326 (PTL 1) describes a configuration of a DC circuit breaker in which a plurality of commutating switches (circuit breakers) are connected in series and a non-linear resistor mainly composed of zinc oxide or the like is connected in parallel to each commutating switch.

According to the DC circuit breaker in PTL 1, the plurality of commutating switches are connected in series to increase a voltage (withstand voltage) that can be interrupted so that suitability for a high-voltage application such as HVDC power transmission can be enhanced.

CITATION LIST

PATENT LITERATURE

PTL 1: Japanese Patent Laying-Open No. 62-113326

SUMMARY OF INVENTION

TECHNICAL PROBLEM

PTL 1 describes substantially simultaneous opening of the plurality of commutating switches in an interruption operation by the DC circuit breaker. According to the description, as the non-linear resistor connected in parallel limits an overvoltage generated across electrodes of opened commutating switches, the DC circuit breaker capable of circuit breaking without dielectric breakdown can be configured.

In a multi-terminal HVDC system, however, a configuration in which a DC reactor is connected in series to a DC circuit breaker for the purpose of curbing an inclination of a fault current that abruptly rises in a ground and short-circuiting fault may be adopted. A voltage suppressed by an arrester which is a constituent component of the DC circuit breaker in the interruption operation by the DC circuit breaker may cause a high voltage in a peripheral device including the DC circuit breaker and the DC reactor. There is thus a concern about increase in size of a device for securing an insulation distance to ground or increase in cost for achieving a high withstand voltage of a constituent device.

The present disclosure was made to solve such problems, and an object of the present disclosure is to suppress, in a DC circuit breaker configured such that a plurality of circuit breaker units are connected in series, a voltage to ground of the DC circuit breaker or an overvoltage generated in a peripheral device thereof in an interruption operation.

SOLUTION TO PROBLEM

In one aspect of the present invention, a DC circuit breaker is provided. The DC circuit breaker connected in series to a DC reactor with respect to an electric line includes N (N being an integer not smaller than 2) circuit breaker units connected in series, first and second voltage detectors, and a controller. Each of the N circuit breaker units includes a circuit breaker and an arrester connected in parallel. The first and second voltage detectors measure a voltage on a bus side and a voltage on an electric line side of a series circuit composed of the DC reactor and the N circuit breaker units. The controller generates an opening command to open the circuit breaker in the N circuit breaker units. When the controller senses an interruption command to the DC circuit breaker, the controller controls the circuit breaker of variably set M (M being an integer not smaller than 1 and not larger than N) circuit breaker units among the N circuit breaker units to open based on at least one of the voltage on the bus side and the voltage on the electric line side of the series circuit.

ADVANTAGEOUS EFFECTS OF INVENTION

According to the present disclosure, in a DC circuit breaker configured such that a plurality of circuit breaker units are connected in series, by variably controlling the number of circuit breaker units to be opened among the plurality of circuit breaker units, a voltage to ground of the DC circuit breaker or an overvoltage generated in a peripheral device thereof in an interruption operation can be suppressed.

BRIEF DESCRIPTION OF DRAWINGS

Fig. 1 is a conceptual diagram illustrating an exemplary configuration of a multi-terminal HVDC power transmission system shown as an application of a DC circuit breaker according to the present embodiment.
Fig. 2 is a conceptual diagram illustrating an exemplary configuration of an HVDC power transmission system in comparison to Fig. 1.
Fig. 3 is a schematic circuit diagram showing a basic configuration of a DC circuit breaker.
Fig. 4 is an exemplary operation waveform diagram of the DC circuit breaker shown in Fig. 3.
Fig. 5 is a conceptual diagram illustrating an exemplary current-voltage characteristic of an arrester in Fig. 3.
Fig. 6 is a schematic circuit diagram showing a configuration of the DC circuit breaker adapted to a high voltage.
Fig. 7A is a circuit diagram in a closed state of the DC circuit breaker shown in Fig. 6.
Fig. 7B is a circuit diagram in an all-open state of the DC circuit breaker shown in Fig. 6.
Fig. 7C is a circuit diagram in a partial open state of the DC circuit breaker shown in Fig. 6.
Fig. 8 is an exemplary operation waveform diagram of an interruption operation according to a comparative example.
Fig. 9 is an exemplary operation waveform diagram of an interruption operation according to the present embodiment.
Fig. 10 is a block diagram illustrating a configuration of the DC circuit breaker according to the present embodiment.
Fig. 11 is a flowchart illustrating the interruption operation by the DC circuit breaker according to the present embodiment.
Fig. 12 is a first conceptual diagram illustrating exemplary setting of the number of circuit breakers to be opened in positive electrode interruption by the DC circuit breaker shown in Fig. 10.
Fig. 13 is a second conceptual diagram illustrating exemplary setting of the number of circuit breakers to be opened in positive electrode interruption by the DC circuit breaker shown in Fig. 10.
Fig. 14 is a conceptual diagram illustrating exemplary setting of the number of circuit breakers to be opened in negative electrode interruption by the DC circuit breaker shown in Fig. 10.
Fig. 15A is a first diagram illustrating variation of the DC circuit breaker according to the present embodiment.
Fig. 15B is a second diagram illustrating variation of the DC circuit breaker according to the present embodiment.
Fig. 15C is a third diagram illustrating variation of the DC circuit breaker according to the present embodiment.
Fig. 15D is a fourth diagram illustrating variation of the DC circuit breaker according to the present embodiment.
Fig. 16 is a conceptual diagram illustrating exemplary setting of the number of circuit breakers to be opened in Fig. 15C.
Fig. 17 is a first conceptual diagram illustrating exemplary setting of the number of circuit breakers to be opened in Fig. 15D.
Fig. 18 is a second conceptual diagram illustrating exemplary setting of the number of circuit breakers to be opened in Fig. 15D.
Fig. 19 is a conceptual diagram illustrating details of processing for detecting a direction of current flow in the interruption operation.

DESCRIPTION OF EMBODIMENTS

An embodiment of the present disclosure will be described in detail below with reference to the drawings. The same or corresponding elements in the drawings below have the same reference characters allotted and description thereof will not be repeated in principle.

(Application of DC Circuit Breaker)

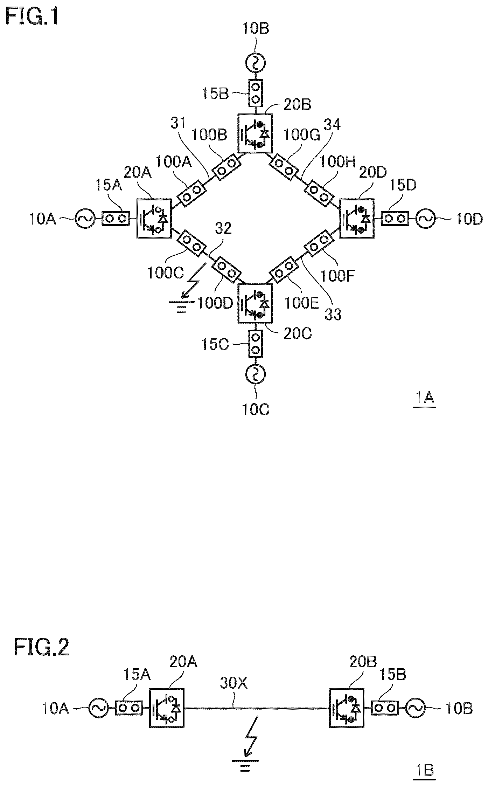

Fig. 1 is a conceptual diagram illustrating an exemplary configuration of a multi-terminal power transmission system shown as an application of a DC circuit breaker according to the present embodiment.
Referring to Fig. 1, a multi-terminal HVDC power transmission system 1A includes HVAC systems 10A to 10D to transmit and receive electric power, AC/DC converters 20A to 20D to convert electric power, and electric lines 31 to 34 in which DC power is transmitted. Each of electric lines 31 to 34 can be formed from a cable or an overhead power transmission line.

Electric line 31 connects AC/DC converters 20A and 20B to each other and electric line 32 connects AC/DC converters 20A and 20C to each other. Similarly, electric line 33 connects AC/DC converters 20C and 20D to each other and electric line 34 connects AC/DC converters 20B and 20D to each other.

Multi-terminal HVDC power transmission system 1A is provided with alternating-current (AC) circuit breakers (ACCB) 15A to 15D to interrupt electric power on the occurrence of a fault and DC circuit breakers 100A to 100H. AC circuit breakers 15A to 15D are connected between HVAC systems 10A to 10D and AC/DC converters 20A to 20D, respectively.

DC circuit breakers 100A and 100B are arranged at opposing ends of electric line 31. Specifically, DC circuit breaker 100A is arranged between AC/DC converter 20A and electric line 31 and DC circuit breaker 100B is arranged between AC/DC converter 20B and electric line 31. Similarly, DC circuit breakers 100C and 100D are arranged at opposing ends of electric line 32, DC circuit breakers 100E and 100F are arranged at opposing ends of electric line 33, and DC circuit breakers 100G and 100H are arranged at opposing ends of electric line 34.

Multi-terminal HVDC power transmission system 1A thus forms a power transmission network based on connection of at least three power converters 20 (collective denotation of AC/DC converters 20A to 20D) through a plurality of electric lines. In each of electric lines 31 to 34 in which DC power is transmitted, in order to curb abrupt rise of a fault current on the occurrence of a ground and short-circuiting fault in the system, a not-shown DC reactor is often connected as being interposed. In this case, the DC reactor is connected in series to each DC circuit breaker 100 (collective denotation of 100A to 100G).

Fig. 2 shows an exemplary configuration of an HVDC power transmission system 1B in comparison to multi-terminal HVDC power transmission system 1A in Fig. 1.

Referring to Fig. 2, dual-terminal HVDC power transmission system 1B forms a power transmission network based on connection of two AC/DC converters 20A and 20B through an electric line 30X. In transmission of AC power from HVAC system 10A to HVAC system 10B, AC/DC converter 20A converts DC power outputted to electric line 30X into AC power and transmits and outputs AC power to HVAC system 10B.

In dual-terminal HVDC power transmission system 1B, AC circuit breakers 15A and 15B are arranged between HVAC systems 10A and 10B and AC/DC converters 20A and 20B, respectively. In interruption of the fault current on the occurrence of a fault or interruption of a load current during maintenance, AC circuit breakers 15A and 15B interrupt the current to turn off also AC/DC converters 20A and 20B. For example, in dual-terminal HVDC power transmission system 1B, on the occurrence of a fault such as a ground fault in electric line 30X, AC circuit breakers 15A and 15B are opened to stop power transmission through electric line 30X, which results in complete power failure.

Referring again to Fig. 1, in multi-terminal HVDC power transmission system 1A, DC circuit breaker 100 is arranged at each of the opposing ends of each of electric lines 31 to 34. Therefore, only the electric line where the fault has occurred can be disconnected from the power transmission network.

For example, when a fault occurs in electric line 32, electric line 32 can be disconnected from the power transmission network by opening DC circuit breakers 100C and 100D. Since electric power can normally be transmitted through electric lines 31, 33, and 34, large-scale power failure that affects the entire system as in Fig. 2 can be avoided. DC circuit breaker 100, on the other hand, is demanded to have capability to interrupt a high voltage adapted to HVDC power transmission.

(Basic Configuration and Operation of DC Circuit Breaker)

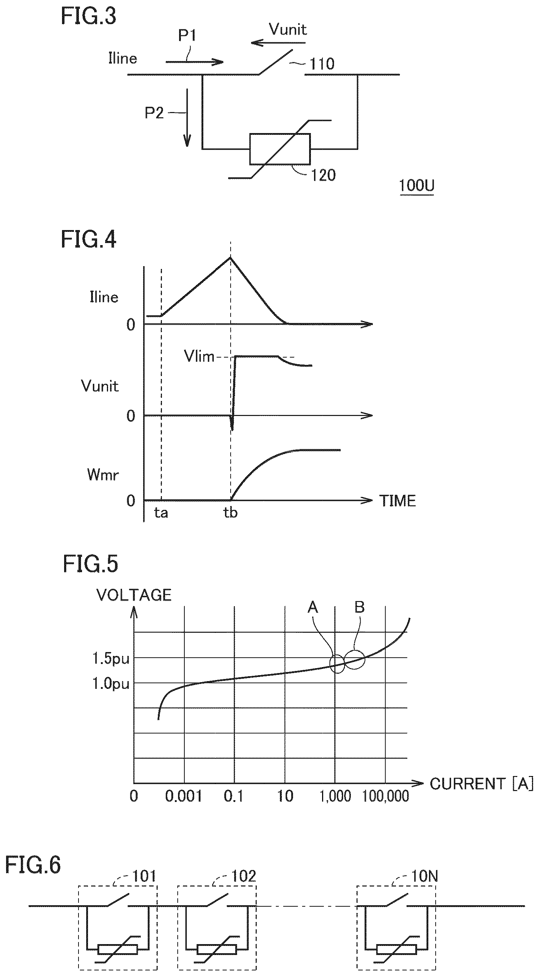

Fig. 3 shows a schematic circuit diagram showing a basic configuration of a DC circuit breaker and Fig. 4 shows an exemplary operation waveform diagram of the DC circuit breaker shown in Fig. 3.

DC circuit breaker 100 includes a circuit breaker unit 100U shown in Fig. 3 as a basic element. Circuit breaker unit 100U includes a circuit breaker 110 and an arrester 120 connected in parallel.

Referring to Fig. 3, in a steady state in which circuit breaker 110 is closed, a line current Iline to be interrupted flows through a path P1. In the DC current, unlike the AC current, periodic current zero with lapse of time is not formed, and hence current zero should be formed in an interruption portion with a method such as a separate excitation method or a semiconductor method.

In an example in Fig. 4, when an interruption command is issued at time ta, circuit breaker 110 is opened at time tb when a current zero point is formed with any method. Before time ta and during a period from time ta to time tb, line current Iline flows through path P1 in Fig. 3.

After the current is interrupted by opening of circuit breaker 110, electromagnetic energy that remains in the circuit is applied across electrodes of open circuit breaker 110 as a transient interruption voltage (TIV). Fig. 4 shows on the same time axis, a schematic waveform diagram of Vunit corresponding to a voltage across the electrodes of circuit breaker 110 and energy Wmr dissipated from arrester 120.

The closed state of circuit breaker 110 will also be referred to as the closed state of circuit breaker unit 100U below and an open state and opening of circuit breaker 110 will also be referred to as the open state and opening of circuit breaker unit 100U below.

Fig. 5 shows an exemplary current-voltage characteristic of arrester 120. Arrester 120 corresponds to the non-linear resistor in PTL 1. Vunit in Fig. 4 is applied across the electrodes of open circuit breaker 110 in accordance with the current-voltage characteristic of arrester 120 shown in Fig. 5.

When the voltage applied across the electrodes of circuit breaker 110 reaches a predetermined limit voltage Vlim, the current in the circuit is commutated to a path P2 in Fig. 3. Limit voltage Vlim corresponding to a maximum value of the TIV after opening of circuit breaker 110 is generally set to approximately 1.5 time as high as a multi-terminal HVDC system voltage. For example, in an example where multi-terminal HVDC system voltage (system voltage) is set to 1.0 [pu] = 320 [kV], limit voltage Vlim is generally set approximately to 1.5 [pu] = 480 [kV].

By thus setting the voltage across the electrodes of circuit breaker 110 to be higher than the system voltage, line current Iline that flows through arrester 120 is limited and interruption of the current by opening of DC circuit breaker 100 is completed.

Cases where DC circuit breaker 100 is to be opened representatively include interruption of a fault current on the occurrence of a fault and interruption of a load current during maintenance. Fig. 5 shows together, an operation point A of arrester 120 at the time of interruption of the load current and an operation point B of arrester 120 at the time of interruption of the fault current. It is understood that there is no great difference in TIV generated in arrester 120 between interruption of the load current and interruption of the fault current, although the current that is interrupted is different.

Fig. 6 shows an exemplary configuration for adaption of the DC circuit breaker to a high voltage.

For example, DC circuit breaker 100 can be adapted to a high voltage by being configured to include N (N: an integer not smaller than 2) circuit breaker units 101 to 10N connected in series. Each of circuit breaker units 101 to 10N is configured as being equivalent to circuit breaker unit 100U shown in Fig. 3.

For example, by connecting four circuit breaker units rated as 80 [kV] in series (N = 4), DC circuit breaker 100 applicable to an HVDC system rated as 320 [kV] can be configured. In the present embodiment, DC circuit breaker 100 is equipped with a serial connection body including N circuit breaker units 101 to 10N below. Furthermore, description will be given on the assumption that a voltage N times as high as a rated voltage of each of circuit breaker units 101 to 10N is comparable to the system voltage, that is, 1.0 [pu], and a voltage N times as high as limit voltage Vlim of each of circuit breaker units 101 to 10N is comparable to the system voltage of 1.5 [pu].

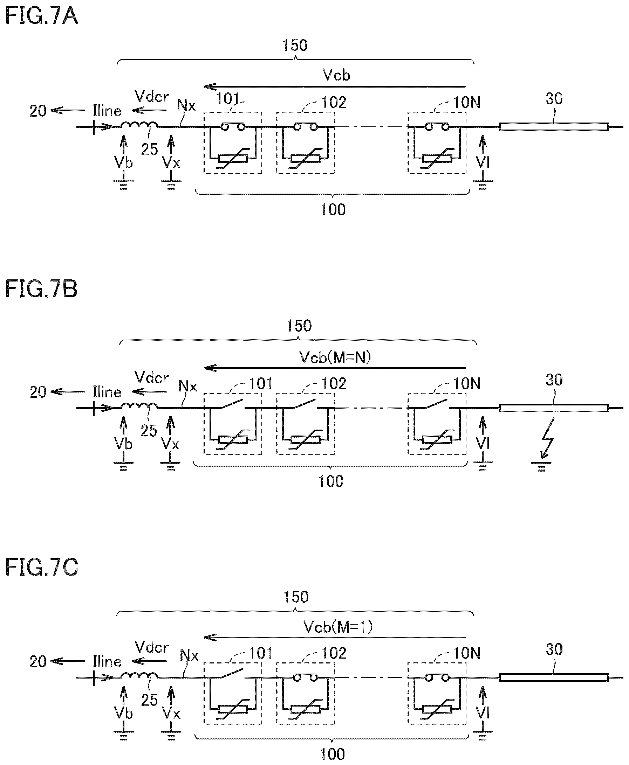

Fig. 7A shows a circuit diagram in the closed state, that is, the steady state before generation of the interruption command, of DC circuit breaker 100 shown in Fig. 6.

Referring to Fig. 7A, a DC reactor 25 is connected between N circuit breaker units 101 to 10N and power converter 20. In other words, DC circuit breaker 100 is connected as being interposed, in series to DC reactor 25 with respect to electric line 30 (collective denotation of electric lines 31 to 34 in Fig. 1) that connect power converters 20 to each other.

In the steady state, each of circuit breaker units 101 to 10N is closed. Therefore, the current in electric line 30 is not interrupted and line current Iline that flows through electric line 30 is being produced. In the example in Fig. 7A, a direction of the current that flows from power converter 20 to electric line 30 is defined as a positive direction (Iline > 0).

At this time, a voltage Vcb across electrodes of the entire DC circuit breaker 100 is zero. Voltage Vcb across the electrodes is comparable to the sum of voltages across electrodes in circuit breakers 110 in N circuit breaker units 101 to 10N.

As will be described in detail later, in DC circuit breaker 100 according to the present embodiment, in an interruption operation in response to generation of the interruption command, variably set M (M: an integer satisfying a condition of $1 \leq M \leq N$) circuit breaker units among N circuit breaker units 101 to 10N are opened.

Fig. 7B shows a circuit state representing an all interruption state as a result of the interruption operation in response to the interruption command to DC circuit breaker 100. In other words, Fig. 7B shows a state in which a condition of M = N is satisfied.

In the state in which the condition of M = N is satisfied, all of N circuit breaker units 101 to 10N are opened in response to the interruption command to DC circuit breaker 100. Consequently, voltage Vcb across the electrodes of DC circuit breaker 100 is N times as high as limit voltage Vlim (Fig. 4) of circuit breaker unit 100U (Fig. 3).

Fig. 7C shows a circuit state representing a partial interruption state as a result of the interruption operation by DC circuit breaker 100. Fig. 7C particularly shows a state in which a condition of M = 1 is satisfied.

In the state in which the condition of M = 1 is satisfied, only a single circuit breaker unit 101 is opened in response to the interruption command to DC circuit breaker 100, and circuit breaker units 102 to 10N are maintained in the closed state. Consequently, voltage Vcb across the electrodes of DC circuit breaker 100 is one time as high as limit voltage Vlim (Fig. 4) of circuit breaker unit 100U (Fig. 3).

As shown in Figs. 7A to 7C in common, regarding a voltage at each portion, of opposing ends of a series circuit 150 composed of DC circuit breaker 100 (N circuit breaker units 101 to 10N) and DC reactor 25, a voltage to ground at a first end on a side of electric line 30 will be referred to as a line voltage V1 and a voltage to ground at a second end on a side of power converter 20, that is, on a bus side, will be referred to as a bus voltage Vb.

Furthermore, of the opposing ends of DC circuit breaker 100 (N circuit breaker units 101 to 10N), the voltage to ground at a first end (a node Nx) connected to DC reactor 25 will be referred to as a voltage Vx.

(Comparative Example of Cut-Off Operation by DC Circuit Breaker)

A comparative example of the interruption operation by DC circuit breaker 100 will now be described. In the comparative example, as described in PTL 1, all of N circuit breaker units 101 to 10N are simultaneously opened in response to the interruption command. In other words, when DC circuit breaker 100 senses the interruption command, it performs the interruption operation in any case so as to form an all-open state shown in Fig. 7B.

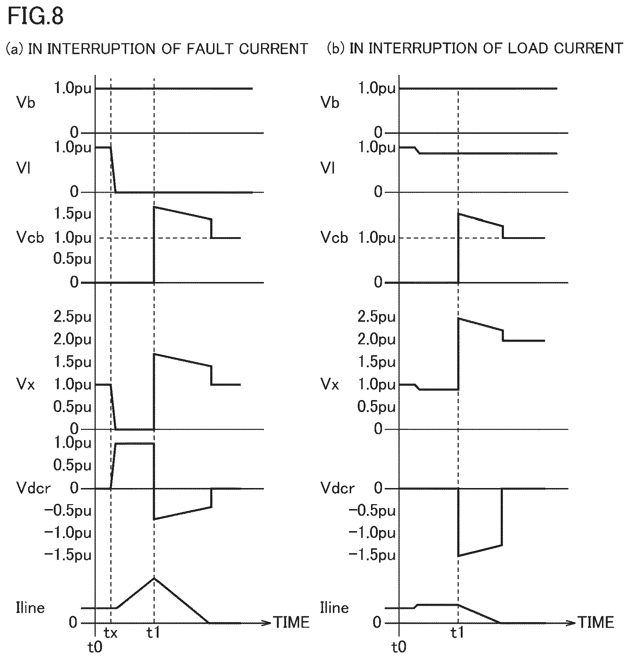

Fig. 8 shows an exemplary operation waveform diagram of the interruption operation according to the comparative example. Fig. 8(a) shows an exemplary operation waveform diagram at the time of interruption of the fault current.

Referring to Fig. 8(a), at time t0 when the steady state has been established, bus voltage Vb and line voltage V1 are at 1.0 [pu] comparable to a rated value of a system voltage transmitted through electric line 30, and DC circuit breaker 100 is in the steady state shown in Fig. 7A. Therefore, all of N circuit breaker units 101 to 10N are in the closed state. Therefore, voltage Vcb across the electrodes of DC circuit breaker 100 is Vcb = 0 and voltage Vx is Vx= 1.0 [pu]. Furthermore, line current Iline has converged to a steady value and a reactor voltage Vdcr generated across opposing ends of DC reactor 25 is Vder = 0.

At time tx after time t0, a ground fault occurs in electric line 30. In response, bus voltage Vb on a side where a fault has not occurred is maintained at 1.0 [pu], whereas line voltage V1 on a side where the fault has occurred lowers. In addition, line current Iline increases as compared with that in the steady state.

Since DC circuit breaker 100 remains in the state in Fig. 7A at this time, voltage Vx also lowers similarly to line voltage V1. In response, a voltage difference between bus voltage Vb and line voltage V1 (voltage Vx) is applied across the opposing ends of DC reactor 25, and hence reactor voltage Vdcr increases to 1.0 [pu].

When the ground fault that has occurred at time tx is sensed by a not-shown overcurrent detection relay or the like, the interruption command to DC circuit breaker 100 is generated. In DC circuit breaker 100, at time t1, in response to the interruption command, the all-open state shown in Fig. 7B is established. In other words, all of N circuit breaker units 101 to 10N are opened.

In response, as voltage Vcb across the electrodes of DC circuit breaker 100 increases to approximately 1.5 [pu] which is the sum of limit voltages Vlim (approximately 1.5 time as high as the rated value) of circuit breaker units 101 to 10N, a circuit voltage becomes higher than the system voltage. In other words, Vlim·N is approximately 1.5 [pu]. As line current Iline is thus commutated to arrester 120, it gradually decreases and finally the fault current is interrupted (Iline = 0). At this time, the voltage increases to approximately Vx = 1.5 [pu] (Vx = V1 + Vcb) as compared to V1 = 0, and hence reactor voltage Vdcr is approximately at -0.5 [pu].

Fig. 8(b) shows an exemplary operation waveform diagram at the time of interruption of the load current by the interruption operation according to the comparative example. For example, as the interruption command to DC circuit breaker 100 for maintenance is generated while a fault is not occurring, a case of interruption of the load current occurs.

Referring to Fig. 8(b), in interruption of the load current, a ground fault is not occurring. Therefore, both of bus voltage Vb and line voltage V1 are approximately at 1.0 [pu] and the interruption command is inputted to DC circuit breaker 100 in a state in which a voltage difference therebetween is small. In the comparative example, DC circuit breaker 100 performs the interruption operation to form the all-open state shown in Fig. 7B also in interruption of the load current.

Therefore, at time t1, in response to the interruption command, all of N circuit breaker units 101 to 10N are opened (Fig. 7B) as in Fig. 8(a). Since voltage Vcb across the electrodes of DC circuit breaker 100 thus increases to approximately Vlim·N = 1.5 [pu] as in Fig. 8(a), the voltage increases to approximately Vx = 2.5 [pu] (Vx = V1 + Vcb) as compared to line voltage V1 of approximately 1.0 [pu]. Consequently, reactor voltage Vdcr is approximately at -1.5 [pu] in accordance with the voltage difference between voltage Vx and bus voltage Vb.

Thus, in the comparative example, the all-open state (Fig. 7B) is formed at the time of interruption of the load current, so that voltage Vx increases to approximately 2,5 [pu] which is higher than 1.5 [pu] at the time of interruption of the fault current. Furthermore, the difference between the voltages applied to the opposing ends of DC reactor 25 also increases from 0.5 [pu] to 1,5 [pu].

Voltage Vx is comparable to the voltage to ground of DC circuit breaker 100 at the time of interruption of the current. Therefore, there is a concern about increase in size and increase in cost for devices in order to secure an insulating distance to ground to adapt to increase in voltage Vx (voltage to ground) and in order to adapt to increase in withstand voltage of DC reactor 25.

(Cut-Off Operation by DC Circuit Breaker According to the Present Embodiment)

In order to overcome the above, in the interruption operation by the DC circuit breaker according to the present embodiment, the number of circuit breaker units to be opened (the number M of circuit breakers to be opened) among N circuit breaker units 101 to 10N is variably controlled. Specifically, in generation of the interruption command, M is controlled to be large when the voltage applied across opposing ends of series circuit 150 is high, whereas M is controlled to be small when the voltage is low.

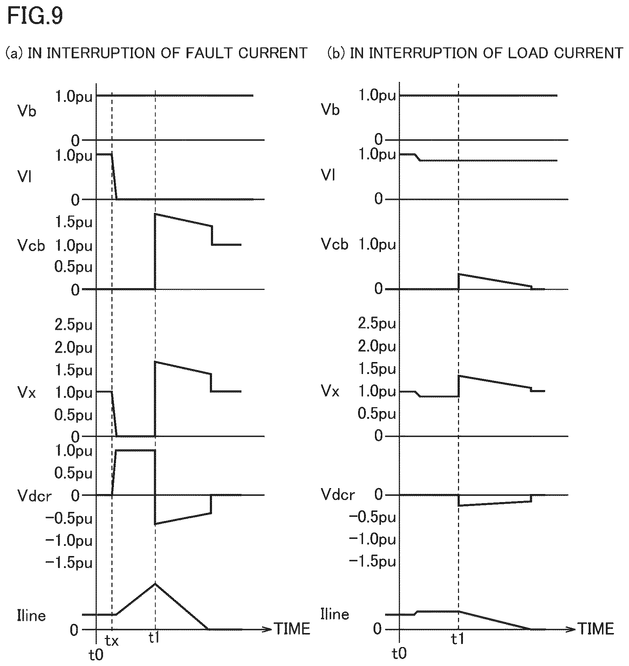

Fig. 9 shows an exemplary operation waveform diagram of the interruption operation according to the present embodiment. Fig. 9(a) shows an operation waveform diagram at the time of interruption of the fault current as in Fig. 8(a). At the time of interruption due to the fault, line voltage Vl has lowered at the time of issuance of the interruption command in response to occurrence of the fault at time tx, and hence the difference between the voltages at the opposing ends of series circuit 150, that is, between bus voltage Vb and line voltage Vl, is large.

Therefore, at the time of interruption due to the fault, control in accordance with the interruption command is carried out to satisfy a condition of M = N, that is, to open all of N circuit breaker units 101 to 10N. Therefore, the waveform diagram at time tx or later in Fig. 9(a) is similar to that in Fig. 8(a). As described with reference to Fig. 8(a), even when all of N circuit breaker units 101 to 10N are opened, a maximum value of Vx is approximately 1.5 [pu] and the absolute value of reactor voltage Vdcr does not become larger than 1.0 [pu] either.

Fig. 9(b) shows an operation waveform diagram at the time of interruption of the load current as in Fig. 8(b). In interruption of the load current, at the time of issuance of the interruption command for maintenance or the like, line voltage V1 has not substantially lowered, and hence difference between the voltages at the opposing ends of series circuit 150, that is, between bus voltage Vb and line voltage V1, is small. When control is carried out with M being set to M = N in such a case, as shown in Fig. 8(b), voltage Vx increases and the absolute value of reactor voltage Vdcr increases as compared with those at the time of interruption due to the fault.

Therefore, in interruption of the load current, the interruption operation in accordance with the interruption command is performed to satisfy a condition of M < N to open only a part of N circuit breaker units 101 to 10N. Fig. 9(b) shows a waveform diagram when a condition of M = 1 is satisfied, that is, when the circuit state shown in Fig. 7C is formed in accordance with the interruption command.

Therefore, since only a single circuit breaker unit 101 is opened (M = 1) at time t1 in Fig. 9(b), voltage Vcb across the electrodes of DC circuit breaker 100 attains to limit voltage Vlim comparable to that of one circuit breaker unit 100U, and Vcb in Fig. 8(a) and 9(a) is Vlim·N. In other words, Vcb = Vlim in Fig. 9(b) is suppressed to (1/N) time as high as Vlim·N comparable to 1.5 [pu].

Therefore, at time t1, voltage Vx increases only by approximately Vlim·M (M = 1 here). In addition, reactor voltage Vdcr lowers only by approximately Vlim·M (M = 1 here).

Consequently, it is understood in Fig. 9(b) that increase in voltage Vx and increase in difference between the voltages applied to the opposing ends of DC reactor 25 are suppressed as compared with that in Fig. 8(b). Thus, increase in size and increase in cost for devices in order to secure an insulating distance to ground and in order to adapt to increase in withstand voltage of DC reactor 25 can be suppressed.

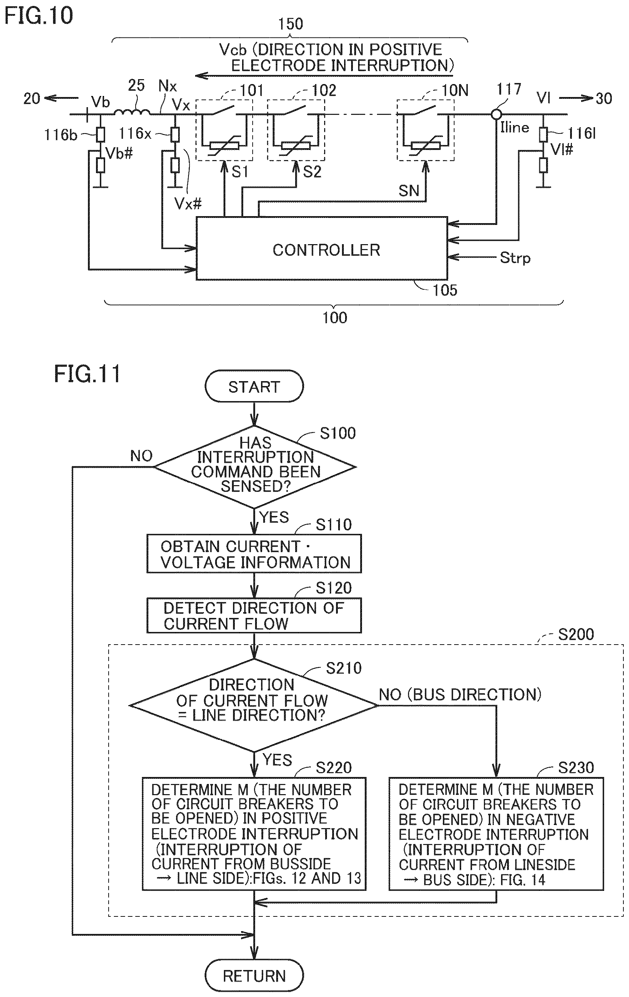

Fig. 10 shows a block diagram illustrating an exemplary configuration of the DC circuit breaker according to the present embodiment.

Referring to Fig. 10, DC circuit breaker 100 according to the present embodiment includes N circuit breaker units 101 to 10N connected in series, a controller 105, voltage detectors 116b, 116x, and 1161, and a current detector 117.

As described above, N circuit breaker units 101 to 10N are connected in series to DC reactor 25 to configure series circuit 150. Line voltage V1 and bus voltage Vb at opposing ends of series circuit 150 are measured by voltage detectors 1161 and 116b, respectively. Furthermore, voltage Vx at a node of connection between N circuit breaker units 101 to 10N and DC reactor 25 is measured by voltage detector 116x. By measuring voltage Vx, reactor voltage Vdcr can be measured based on voltage difference from bus voltage Vb.

Each of voltage detectors 116b, 116x, and 1161 is configured, for example, with a voltage division circuit a voltage division ratio of which has already been known. Controller 105 can obtain bus voltage Vb, line voltage Vl, and voltage Vx based on divided voltages (measurement values) Vb#, Vx#, and Vl# obtained by voltage detectors 116b, 116x, and 1161 and the voltage division ratio. In other words, voltage detectors 116b and 1161 correspond to one example of the "first voltage detector" and one example of "second voltage detector," respectively.

Current detector 117 can detect magnitude and a direction of line current Iline. For example, current detector 117 can be configured with a shunt resistance or the like.

Controller 105 can generate opening commands S1 to SN to open circuit breaker units 101 to 10N. Circuit breaker units 101 to 10N are maintained in the closed state while opening commands S1 to SN are not generated, whereas they are opened in response to generation of opening commands S1 to SN. When an interruption command Strp directed to DC circuit breaker 100 is received, generation of opening commands S1 to SN is controlled based on voltage and current information at the time of sensing of the interruption command. Specifically, the number M of circuit breakers to be opened can variably be controlled depending on how many opening commands of opening commands S1 to SN are generated. Since voltage Vcb across the electrodes at the time of interruption by DC circuit breaker 100 is expressed as Vcb = M·Vlim, voltage Vcb across the electrodes can variably be controlled based on the number M of circuit breakers to be opened.

Fig. 11 is a flowchart illustrating the interruption operation by the DC circuit breaker according to the present embodiment. Control processing shown in Fig. 11 is performed by controller 105.

In step (which will simply be denoted as "S" below) 100, controller 105 determines whether or not it has sensed the interruption command. For example, when an external overcurrent relay (not shown) senses occurrence of a fault or when the interruption command for maintenance is manually inputted, interruption command Strp is inputted to controller 105 and determination as YES is made in S100. Alternatively, controller 105 can also self-generate the interruption command based on line current Iline or the like. When the interruption command is not sensed, processing in S110 or later is not started.

When controller 105 has sensed the interruption command (determination as YES in S100), in S110, it obtains current and voltage information of each component. For example, bus voltage Vb, line voltage Vl, voltage Vx, and line current Iline are obtained from measurement values obtained by voltage detectors 116b, 116x, and 116l and current detector 117 shown in Fig. 10.

In S110, a filtered smoothened value for each of bus voltage Vb, line voltage Vl, voltage Vx, and line current Iline may be obtained.

In S120, controller 105 detects a direction of the current to be interrupted (that is, a direction of current flow in the interruption operation) based on a direction of line current Iline obtained in S110. In step S120, when the direction of line current Iline is from power converter 20 toward electric line 30 (Iline > 0), the direction of current flow is detected as a line direction. For example, when a fault occurs in electric line 30, the direction of current flow is detected as the line direction.

In contrast, when the direction of line current Iline is from electric line 30 toward power converter 20 (Iline < 0), the direction of current flow is detected as a bus direction. For example, when a fault occurs on the bus side (the side of power converter 20), the direction of current flow is detected as the bus direction.

At the time of interruption of the load current described with reference to Fig. 8(b) and Fig. 9(b), the direction of line current Iline varies depending on which of power flow and reverse power flow is occurring. Therefore, in S120, which of the line direction and the bus direction the direction of current flow falls under is detected based on the direction of line current Iline.

Furthermore, in S200, controller 105 sets the number N of circuit breakers to be opened in the interruption operation based on bus voltage Vb and line voltage Vl. At this time, a logic for determination of the number M of circuit breakers to be opened is switched depending on the direction of current flow in the interruption operation. S200 includes S210, S220, and S230.

In S210, controller 105 branches processing in accordance with the direction of current flow in the interruption operation detected in S120. Specifically, when the direction of current flow falls under the line direction, determination as YES is made in S210, and the process proceeds to S220 for positive electrode interruption to interrupt the current toward electric line 30. In contrast, when the direction of current flow falls under the bus direction, determination as YES is made in S210 and the process proceeds to S230 for negative electrode interruption to interrupt the current toward the bus.

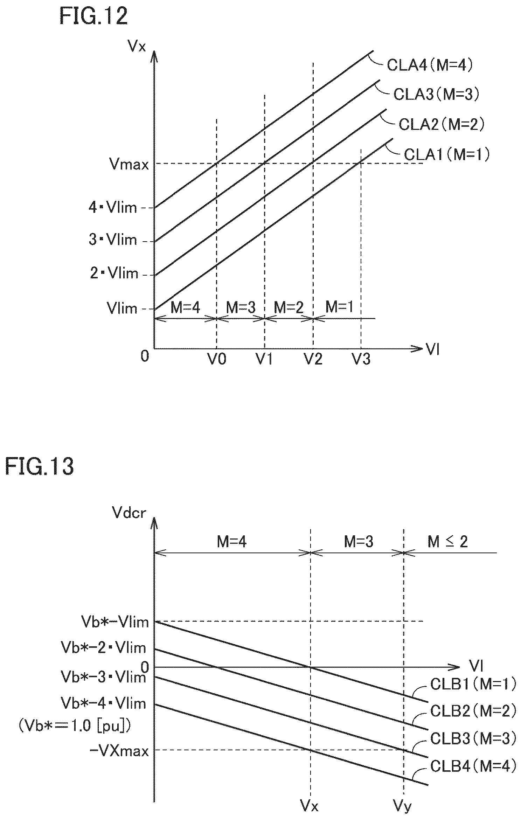

In S220, controller 105 determines the number M of circuit breakers to be opened in accordance with the logic in positive electrode interruption. Exemplary setting of the number of circuit breakers to be opened (M) in positive electrode interruption will be described with reference to Figs. 12 and 13. In positive electrode interruption by the DC circuit breaker in Fig. 10, a current (Iline) with DC reactor 25 being defined as an upstream side in a direction from DC reactor 25 toward the DC circuit breaker is interrupted. Therefore, the number M of circuit breakers to be opened is preferably determined in consideration also of increase in reactor voltage Vdcr (Vder = Vb-Vx) applied across terminals of DC reactor 25 in addition to increase in voltage Vx.

Fig. 12 is a first conceptual diagram illustrating exemplary setting of the number of circuit breakers to be opened (M) in positive electrode interruption by the DC circuit breaker shown in Fig. 10. Fig. 12 shows exemplary setting of the number of circuit breakers to be opened (M) for suppression of excessive increase in voltage Vx.

The abscissa in Fig. 12 represents line voltage Vl and the ordinate represents a value of voltage Vx increased after opening of M circuit breaker units. Voltage Vx on the ordinate in Fig. 12 corresponds to voltage Vx (maximum value) at time t1 in Fig. 8(a) and 8(b) and Fig. 9(a) and 9(b).

In DC circuit breaker 100, reactor voltage Vdcr of DC reactor 25, and line voltage Vl, bus voltage Vb, and voltage Vcb (absolute value) across the electrodes generated in the interruption operation satisfies relation of Vx = Vl + Vcb in consideration of the direction of the current in positive electrode interruption.

In Fig. 12, characteristic lines CLA1 to CLA4 representing voltages Vx when N is set to N = 4 and the number M of circuit breakers to be opened is set to M = 1 to 4 are plotted. Each of characteristic lines CLA1 to CLA4 is expressed as a linear function of line voltage Vl having as an intercept, a product of limit voltage Vlim (Fig. 4) of a single circuit breaker unit and the number M of circuit breakers to be opened. In other words, voltage Vx (M) when the number of circuit breakers to be opened is set to M is shown in an expression (1) below, in consideration of magnitude of Vcb being M·Vlim.

$$Vx\,(M) = Vl + Vcb = Vl + M \cdot Vlim \quad ... \ (1)$$

Therefore, the number M of circuit breakers to be opened can be determined such that M is set to the maximum value within a range where a condition of Vx (M) < Vmax is satisfied in accordance with intersections between a designed upper limit voltage Vmax of voltage Vx and characteristic lines CLA1 to CLA4. Designed upper limit voltage Vmax is, for example, approximately 1.5 [pu]. Therefore, a schematic characteristic line under a condition of Vlim = (1.5/4) [pu] is shown below. Designed upper limit voltage Vmax corresponds to one example of the "first allowable upper limit voltage."

As shown in Fig. 12, within a voltage range of $0 \leq Vres \leq V0$, M is set to M = 4, and within a voltage range of $V0 < V1 \leq V1$, M is set to M = 3, with x coordinates of intersections between Vx = Vmax and characteristic lines CLA4 to CLA1 in accordance with the expression (1), that is, values of line voltage V1, being defined as V0, V1, V2, and V3, respectively. Similarly, within a voltage range of $V1 < V1 \leq V2$, M can be set to M = 2, and within a voltage range of V2 < Vres, M can be set to M = 1.

Fig. 13 is a second conceptual diagram illustrating exemplary setting of the number of circuit breakers to be opened (M) in positive electrode interruption by the DC circuit breaker shown in Fig. 10. Fig. 13 shows exemplary setting of the number of circuit breakers to be opened (M) for suppression of excessive increase in voltage Vdcr.

The abscissa in Fig. 13 represents line voltage V1 as in Fig. 12, and the ordinate represents a value of reactor 2Vdcr increased after M circuit breaker units are opened. Voltage Vx on the ordinate in Fig. 13 corresponds to voltage Vdcr (maximum value) at time tl in Fig. 8(a) and 8(b) and Fig. 9(a) and 9(b). With Vdcr being defined as Vdcr = Vb-Vx in Fig. 10, Vx = V1 + Vcb described above is substituted therein. Then, an expression (2) below is satisfied for reactor voltage Vdcr.

$$Vdcr = Vb - Vx = Vb - Vl - Vcb \quad\quad ... \ (2)$$

Since the current direction in positive electrode interruption in Fig. 10 is the current direction with power converter 20 (the bus side) being defined as the upstream side, bus voltage Vb in the interruption operation can be regarded as having a rated value Vb* (for example, 1.0 [pu]).

Therefore, as shown in Fig. 13, in the example where N is set to N = 4 as in Fig. 12, characteristic lines CLB1 to CLB4 representing reactor voltages Vdcr when the number of circuit breakers to be opened is set to M = 1 to 4 are plotted.

Each of characteristic lines CLB1 to CLB4 is expressed as a linear function of line voltage V1 having an intercept determined by a constant Vb* (for example, 1.0 [pu]) corresponding to the rated value of bus voltage Vb and Vcb = M·Vlim in the expression (2). In other words, reactor voltage Vdcr (M) with the number M of circuit breakers to be opened is shown in an expression (3) below.

$$Vdcr\,(M) = -Vl + (Vb* - M \cdot Vlim) \quad ... \ (3)$$

Therefore, the number M of circuit breakers to be opened can be determined such that M has the maximum value within a range where -VXmax < Vdcr (M) < VXmax is satisfied in accordance with intersections between a designed limit voltage ±VXmax of reactor voltage Vdcr and characteristic lines CLC1 to CLC4. VXmax is, for example, approximately 1.0 [pu]. VXmax corresponds to one example of the "allowable upper limit voltage" or the "second allowable upper limit voltage."

For example, the number M of circuit breakers to be opened can be determined such that M has the maximum value within the range where -VXmax < Vdcr (M) < VXmax is satisfied in accordance with the intersections between designed limit voltage ±VXmax of reactor voltage Vdcr and characteristic lines CLB1 to CLB4. M can be set to M = 4 within a voltage range of $Vl \leq Vx$ and M can be set to M = 3 within a voltage range of $Vx < Vl \leq Vy$ with values of x coordinates (that is, line voltage Vl) of intersections between characteristic lines CLC1 and CLC2 and designed limit voltage -VXmax shown in Fig. 13 being denoted as Vx and Vy, respectively. Within a voltage range of Vl > Vy, M can be set to M = 2 (or M = 1).

Thus, in positive electrode interruption, the number M of circuit breakers to be opened is obtained based on line voltage Vl which is information on the voltage on the downstream side of the current to be interrupted. Generally, in common to Figs. 12 and 13, voltage interruption capability can be secured by increasing the number M of circuit breakers to be opened in interruption in a state in which line voltage Vl is low and the difference between the voltages at the opposing ends of series circuit 150 is large (Fig. 9(a)). Increase in voltage Vx at the node of connection between the DC reactor and N circuit breaker units 101 to 10N and the voltage applied to DC reactor 25 can be suppressed by decreasing the number M of circuit breakers to be opened in interruption in a state in which line voltage Vl is high and the difference between the voltages at the opposing ends of series circuit 15 is small (Fig. 9(b)).

Positive electrode interruption by DC circuit breaker 100 in Fig. 10 is interruption of the current with DC reactor 25 being defined as the upstream side thereof, and hence it is interruption of the current in a direction of increase in reactor voltage Vdcr. Therefore, the number M of circuit breakers to be opened is set based on line voltage Vl, in light of both of relation between line voltage Vl and voltage Vx (Fig. 12) and relation between line voltage Vl and reactor Vdcr (Fig. 13).

Specifically, in S220, based on line voltage Vl, Nl to satisfy the condition of Vx < Vmax is obtained with reference to Fig. 12, and N2 to satisfy the condition of -VXmax < Vdcr < VXmax is obtained with reference to Fig. 13. Furthermore, the number N of circuit breakers to be opened in positive electrode interruption can be set by calculation of N = min (N1, N2) to obtain a minimum value of each of them.

In S230, controller 105 determines the number M of circuit breakers to be opened in accordance with a logic in negative electrode interruption.

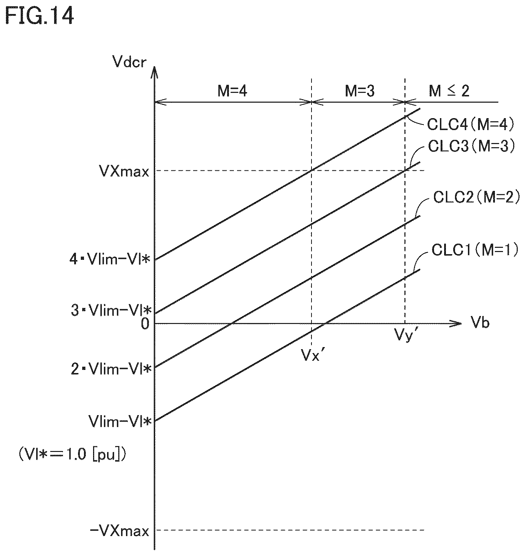

Fig. 14 shows a conceptual diagram illustrating exemplary setting of the number of circuit breakers to be opened (M) in negative electrode interruption by the DC circuit breaker shown in Fig. 10.

In negative electrode interruption by the DC circuit breaker in Fig. 10, the current (Iline) with DC reactor 25 being defined as the downstream side thereof in the direction from DC circuit breaker 100 toward DC reactor 25 is interrupted, and hence voltage Vx is lowered. Therefore, in negative electrode interruption, the number M of circuit breakers to be opened should only be determined in consideration only of increase in reactor voltage Vdcr without consideration of increase in voltage Vx.

The abscissa in Fig. 14 represents bus voltage Vb and the ordinate represents reactor voltage Vdcr generated across the opposing ends of DC reactor 25.

Since the direction of the current (Iline) to be interrupted in negative electrode interruption is opposite to that in positive electrode interruption, polarity of voltage Vcb across the electrodes generated in interruption by DC circuit breaker 100 is reversed from the polarity in positive electrode interruption. Therefore, since Vx is defined as Vx = Vl-Vcb in negative electrode interruption, by substituting this into Vdcr = Vb-Vx described above, an expression (4) below is satisfied for reactor voltage Vder.

$$Vdcr = Vb+Vcb-Vl \quad ... (4)$$

As described above, Vcb is obtained as Vcb = M·Vlim. Furthermore, the current direction is the current direction with electric line 30 being defined as the upstream side, and hence line voltage Vl in the interruption operation can be regarded as having a rated value Vl* (for example, 1.0 [pu]).

Therefore, as shown in Fig. 14, in an example where N is set to N = 4 as in Figs. 12 and 13, characteristic lines CLC1 to CLC4 representing reactor voltages Vdcr when the number M of circuit breakers to be opened is set to M = 1 to 4 are plotted.

Each of characteristic lines CLC1 to CLC4 is expressed as a linear function of bus voltage Vb having an intercept determined by a constant Vl* comparable the rated value of line voltage Vl and Vcb = M·Vlim in the expression (4). In other words, reactor voltage Vdcr (M) when the number of circuit breakers to be opened is set to M is shown in an expression (5) below.

$$Vdcr (M) = Vb + (M·Vlim-Vl*) \quad ... (5)$$

Therefore, the number M of circuit breakers to be opened can be determined such that M has the maximum value within a range where -VXmax < Vdcr (M) < VXmax is satisfied in accordance with intersections between designed limit voltage ±VXmax of reactor voltage Vdcr described above and characteristic lines CLC1 to CLC4.

Within a voltage range of Vb ≤ Vx', M can be set to M = 4, and within a voltage range of Vx' < Vb ≤ Vy', M can be set to M = 3, with x coordinates (that is, bus voltage Vb) of intersections between characteristic lines CLC4 and CLC3 in accordance with the expression (5) and designed upper limit voltage VXmax shown in Fig. 14 being defined as Vx' and Vy', respectively. Within a voltage range of Vb > Vy', M can be set to M= 2 (or M= 1).

Therefore, also in negative electrode interruption, the number M of circuit breakers to be opened is obtained based on bus voltage Vb which is information on the voltage on the downstream side of the current to be interrupted. Generally, voltage interruption capability can be secured by increasing the number M of circuit breakers to be opened in interruption in a state in which bus voltage Vb is low and the difference between the voltages at the opposing ends of series circuit 150 is large as shown in Fig. 14. Increase in reactor voltage Vdcr can be suppressed, on the other hand, by decreasing the number M of circuit breakers to be opened in interruption in a state in which bus voltage Vb is high and the difference between the voltages at the opposing ends of series circuit 150 is small. Thus, in negative electrode interruption, the number M of circuit breakers to be opened is set based on bus voltage Vb in light of relation between bus voltage Vb and reactor voltage Vdcr.

Referring again to Fig. 11, when controller 105 determines the number M of circuit breaker units to be opened in response to the interruption command in S220 or S230 as described with reference to Figs. 12 and 13 or Fig. 14, it generates at least one or all (that is, M) of opening commands S1 to SN in accordance with the determination. The number M of circuit breakers to be opened is thus set to be larger as bus voltage Vb (in positive electrode interruption) or line voltage V1 (in negative electrode interruption) on the downstream side of the current to be interrupted, which is selected in accordance with the direction of current flow in the interruption operation, is lower, whereas the number M of circuit breakers to be opened is set to be smaller as bus voltage Vb or line voltage Vl is higher.

Consequently, according to the DC circuit breaker according to the present embodiment, when a plurality of (N) circuit breakers 110 (Fig. 3) are used as being connected in series to DC reactor 25 in the configuration where circuit breakers 110 are connected in series, increase in voltage Vx (the voltage to ground of DC circuit breaker 100) and reactor voltage Vdcr in the interruption operation can be suppressed by variable control of the number (M) of circuit breakers to be opened. Consequently, the voltage to ground of DC circuit breaker 100 and an overvoltage generated in a peripheral device thereof in the interruption operation can be suppressed.

By thus using actual measurement values of line voltage Vl and bus voltage Vb at the time of sensing of the interruption command, in correspondence with a state of distribution of voltages on electric line 30 which vary depending on a condition of occurrence of a fault such as positional relation between a point of the fault and a point of arrangement of DC circuit breaker 100, the number N of circuit breakers to be opened in DC circuit breaker 100 can appropriately be set in accordance with the actual condition.

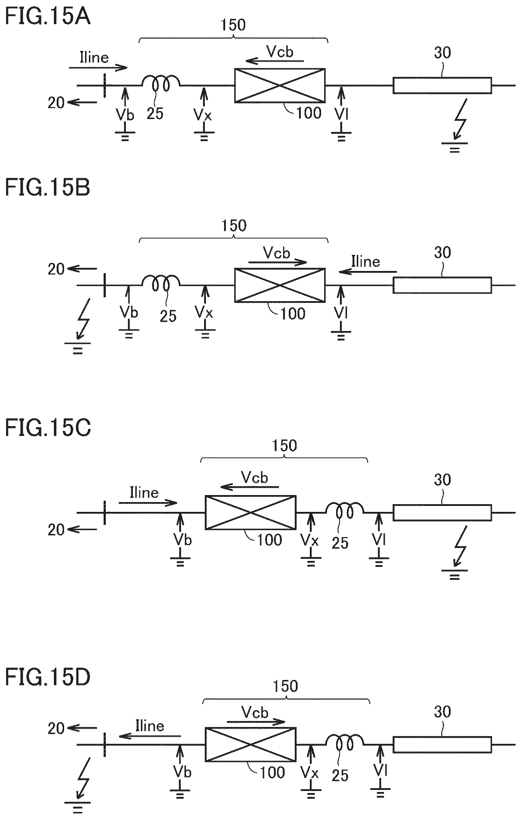

Variations of the DC circuit breaker according to the present embodiment will now be described with reference to Figs. 15A to 15D.

Fig. 15A shows a circuit diagram on the occurrence of a fault in electric line 30 in the configuration where DC reactor 25 is connected on a power converter 20 side of N circuit breaker units 101 to 10N as in Figs. 8(a), 9(a), and 10. Since the current that flows toward electric line 30 is interrupted at this time, the direction of current flow in the interruption operation is detected as the line direction, based on the direction of line current Iline. The logic (Figs. 12 and 13) in positive electrode interruption (S220) thus sets the number M of circuit breakers to be opened based on line voltage Vl in light of both of relation between line voltage Vl and voltage Vx and relation between line voltage Vl and reactor Vdcr.

Fig. 15B shows a case in which the fault has occurred on the side of power converter 20 in the configuration as in Fig. 15A. In the case in Fig. 15B, the current that flows toward power converter 20 is interrupted, and hence the direction of current flow in the interruption operation is detected as the line direction, based on the direction of line voltage Iline. The logic (Fig. 14) in negative electrode interruption (S230) thus sets the number M of circuit breakers to be opened based on bus voltage Vb in light of relation between bus voltage Vb and reactor voltage Vdcr.

Figs. 15C and 15D show a configuration in which DC reactor 25 is connected on an electric line 30 side of N circuit breaker units 101 to 10N, in contrast to Figs. 15A and 15B.

Fig. 15C shows a circuit diagram on the occurrence of a fault in electric line 30. In Fig. 15C, the current that flows toward electric line 30 is interrupted as in Fig. 15A. Therefore, as the direction of current flow in the interruption operation is detected as the line direction, the logic in positive electrode interruption (S220) sets the number M of circuit breakers to be opened.

In positive electrode interruption in Fig. 15C, unlike positive electrode interruption in Fig. 15A, the current (Iline) with DC reactor 25 being defined as the downstream side thereof is interrupted. Therefore, as in negative electrode interruption in Fig. 15B, the number M of circuit breakers to be opened should only be determined in consideration only of increase in reactor voltage Vdcr without consideration of increase in voltage Vx.

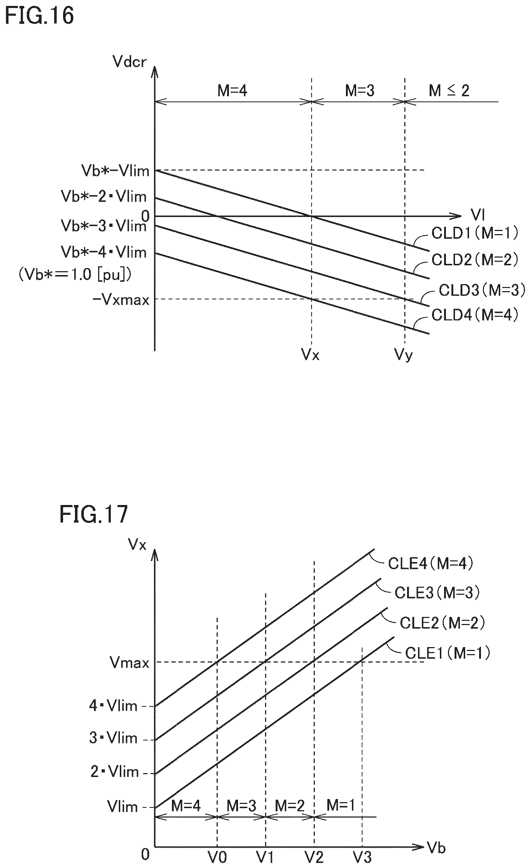

Fig. 16 is a conceptual diagram illustrating exemplary setting of the number of circuit breakers to be opened in Fig. 15C in positive electrode interruption.

Fig. 15C shows relation among reactor voltage Vdcr, and line voltage Vl, bus voltage Vb, and voltage Vcb across the electrodes generated in the interruption operation, as $Vx = Vl + Vdcr$ and $Vb = Vx + Vcb$, depending on the direction of current flow. Therefore, an expression (6) below is satisfied for reactor voltage Vdcr.

$$Vdcr = Vx - Vl = (Vb - Vcb) - Vl = -Vl + Vb - Vcb \qquad ... (6)$$

Therefore, as shown in Fig. 16, in the example where N is set to N = 4 as in Figs. 12 to 14, characteristic lines CLD1 to CLD4 representing reactor voltages Vdcr when the number M of circuit breakers to be opened is set to M = 1 to 4 are plotted.

Each of characteristic lines CLD1 to CLD4 is expressed as a linear function of line voltage Vl having an intercept determined by constant Vb* corresponding to the rated value of bus voltage Vb and Vcb = M·Vlim in the expression (6) above. In other words, reactor voltage Vdcr (M) at the time when the number of circuit breakers to be opened is set to M is shown in an expression (7) below.

$$Vdcr (M) = -Vl + (Vb^* - M \cdot Vlim) \qquad ... (7)$$

Since the expression (7) is the same as the expression (3), characteristic lines CLD1 to CLD4 in Fig. 16 are similar to characteristic lines CLB1 to CLB4 in Fig. 13. Thus, in Fig. 15C (in positive electrode interruption), in S220 (Fig. 11), the number M of circuit breakers to be opened can be set based on line voltage Vl only in light of relation between line voltage Vl and reactor voltage Vder in Fig. 15A (in positive electrode interruption).

Therefore, in Fig. 15C, in S220 (Fig. 11), the number N of circuit breakers to be opened in positive electrode interruption can be set by obtaining N which satisfies -VXmax < Vdcr < VXmax based on line voltage Vl with reference to Fig. 16.

Fig. 15D shows a circuit diagram on the occurrence of a fault on the side of power converter 20 in contrast to Fig. 15C. In Fig. 15D, the current that flows toward power converter 20 is interrupted as in Fig. 15B. Therefore, the logic in negative electrode interruption (S230) sets the number M of circuit breakers to be opened, as the direction of current flow in the interruption operation is detected as the bus direction.

In negative electrode interruption in Fig. 15D, unlike negative electrode interruption in Fig. 15B, the current (Iline) with DC reactor 25 being defined as the upstream side thereof is interrupted. Therefore, as in positive electrode interruption in Fig. 15A, the number M of circuit breakers to be opened is preferably determined in consideration also of increase in reactor voltage Vdcr applied across the terminals of DC reactor 25 in addition to increase in voltage Vx.

Fig. 17 is a first conceptual diagram illustrating exemplary setting of the number of circuit breakers to be opened in Fig. 15D. Fig. 17 shows exemplary setting of the number of circuit breakers to be opened (M) for suppression of excessive increase in voltage Vx.

In Fig. 15D, in consideration of the direction of the current, an orientation of voltage Vcb across the electrodes generated in the interruption operation is reverse to the orientation in Fig. 15C, and hence relation is shown as Vdcr = Vb-Vl+Vcb. When this relation is substituted into Vx = Vl+Vdcr, voltage Vx can be shown in an expression (8) below.

$$Vx = Vl + Vdcr = Vb + Vcb \quad ... (8)$$

In Fig. 17, characteristic lines CLE1 to CLE4 representing voltages Vx when the number M of circuit breakers to be opened is set to M = 1 to 4 in the example where N is set to N = 4 are plotted. Each of characteristic lines CLE1 to CLE4 is expressed as a linear function of line voltage Vl having a product of limit voltage Vlim (Fig. 4) of one circuit breaker unit and the number M of circuit breakers to be opened as an intercept. In other words, voltage Vx (M) at the time when the number of circuit breakers to be opened is set to M is shown in an expression (9) below.

$$Vx (M) = Vb + M \cdot Vlim \qquad ... (9)$$

It is understood based on comparison between the expression (9) and the expression (1) that characteristic lines CLE1 to CLE4 in Fig. 17 correspond to modification to the abscissa from line voltage Vl to bus voltage Vb for characteristic lines CLA1 to CLA4 in Fig. 12.

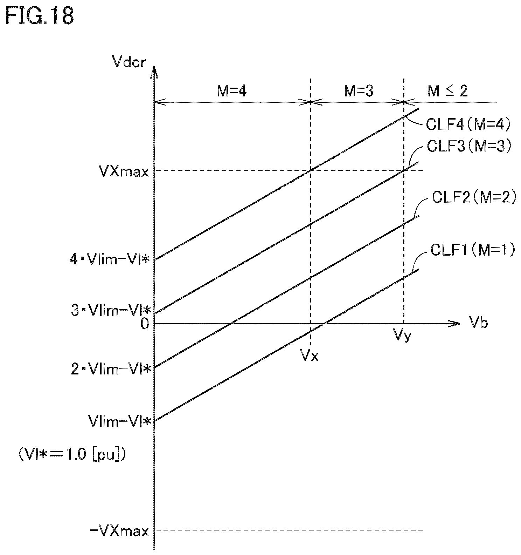

Fig. 18 is a second conceptual diagram illustrating exemplary setting of the number of circuit breakers to be opened in Fig. 15D. Fig. 18 shows exemplary setting of the number of circuit breakers to be opened (M) for suppression of excessive increase in voltage Vdcr, and in particular, in Fig. 18, characteristic lines CLF1 to CLF4 representing reactor voltages Vdcr when the number M of circuit breakers to be opened is set to M = 1 to 4 in the example where N is set to N = 4 are plotted.

Since relation of Vder = Vb-Vl+Vcb is satisfied in Fig. 15D as described above, each of characteristic lines CLE1 to CLE4 is expressed as a linear function of bus voltage Vb having a product of limit voltage Vlim (Fig. 4) of one circuit breaker unit and the number M of circuit breakers to be opened as an intercept. In other words, reactor voltage Vdcr at the time when the number of circuit breakers to be opened is set to M is shown in an expression (10) below.

$$Vdcr (M) = Vb + (M \cdot Vlim - Vl^*) \qquad ... (10)$$

Since the expression (9) is the same as the expression (5), characteristic lines CLF1 to CLF4 in Fig. 18 are similar to characteristic lines CLC1 to CLC4 in Fig. 14.

Therefore, in Fig. 15D, in S230 (Fig. 11), based on bus voltage Vb, N1 which satisfies Vx < Vmax is obtained with reference to Fig. 17 and N2 which satisfies -VXmax < Vder < VXmax is obtained with reference to Fig. 18. Furthermore, the number N of circuit breakers to be opened in negative electrode interruption can be set by calculation of N = min (N1, N2) to obtain a minimum value of each of them.

Thus, also in Figs. 15C and 15D, based on the direction of the current to be interrupted, the number M of circuit breakers to be opened (M ≤ N) among N circuit breaker units can appropriately be set based on line voltage Vl (in positive electrode interruption) or bus voltage Vb (in negative electrode interruption) which is information on the voltage on the downstream side of the current. Furthermore, excessive increase in reactor voltage Vdcr and voltage to ground (voltage Vx) of DC circuit breaker 100 can be suppressed depending on on which of the upstream side and the downstream side in the flow of the current to be interrupted DC reactor 25 is located.

By thus switching the logic to determine the value of M based on the voltage on the downstream side in the direction of current flow in accordance with combination of first information about which of the line direction (positive electrode interruption with the side of electric line 30 being defined as the downstream side) and the bus direction (negative electrode interruption with the side of power converter 20 being defined as the downstream side) is defined as the downstream side in the direction of the current to be interrupted and second information indicating on which of the upstream side and the downstream side DC reactor 25 is located, increase in voltage Vx (the voltage to ground of DC circuit breaker 100) and reactor voltage Vdcr in the interruption operation can be suppressed.

Setting of the number M of circuit breakers to be opened is not limited to examples in Figs. 12 to 14 and 16 to 18 described above. Correspondence between the voltage difference and the number M of circuit breakers to be opened may be defined in advance such that M is increased when the difference between the voltages at the opposing ends of series circuit 150 is large and M is decreased when the difference between the voltages is small, for example, based on line voltage Vl and bus voltage Vb obtained in S110.

(Processing for Detecting Direction of Current flow)

As described with reference to Figs. 3 and 4, there is delay until actual opening of circuit breaker 110 (Fig. 2) since the time point of generation of the interruption command, whereas the logic (S220, S230) to determine the number M of circuit breakers to be opened is switched depending on the direction of the current to be interrupted in the present embodiment. Therefore, when the direction of current flow (the direction of the current) is detected in S120 in Fig. 12 by using line current Iline at the time point of sensing of the interruption command as it is, there is a concern about detection of the direction of current flow opposite to that at the time of actual opening of circuit breaker 110.

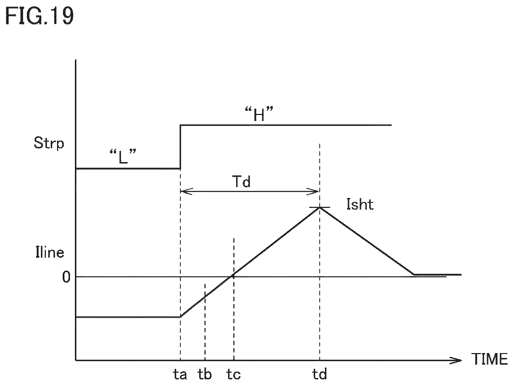

Therefore, in S120, as will be described with reference to Fig. 19, the direction of current flow is preferably detected with the use of a predicted current value at the time of actual interruption.

Fig. 19 is a conceptual diagram illustrating details of processing for detecting the direction of current flow in the interruption operation.

Referring to Fig. 19, before time ta, negative line current Iline, that is, a steady current from the side of electric line 30 toward power converter 20, is generated as a result of demand and supply of electric power or the like. In response to occurrence of a fault on the side of electric line 30 in this state, interruption command Strp inputted to controller 105 makes transition from a low level (L level) to a high level (H level). Controller 105 thus senses the interruption command at time ta.

Since the current that flows toward electric line 30 is interrupted in this case, at time ta or later, line current Iline varies in a positive direction and the direction is reversed at time tc. Consequently, at time td when circuit breaker 110 is actually opened, the direction of current flow is the line direction. Therefore, determination as YES is made in S210 in Fig. 12, and the number M of circuit breakers to be opened is preferably determined in accordance with the logic (S220) in positive electrode interruption.

When detection processing in S120 (Fig. 12) is performed by using line current Iline at time ta when interruption command Strp is issued as it is, however, there is a concern about determination of the number M of circuit breakers to be opened in accordance with the logic (S230) in negative electrode interruption due to detection of the direction of current flow as the bus direction.

Therefore, processing for detecting the direction of current flow in S120 is preferably performed based on calculation of a rate of change of line current Iline after sensing of interruption command Strp and positive/negative of a predicted current value Isht corresponding to line current Iline at time td.

Predicted current value Isht can be obtained in accordance with an expression (12), for example, by calculating in accordance with an expression (11), a rate Kiln of change of the current from detection values Iline (ta) and Iline (tb) obtained by current detector 117 at time ta and time tb. Td in the expression (12) represents delay until actual opening of circuit breaker 110 since sensing of interruption command Strp, and can be determined in advance as a specification value of the circuit breaker unit.

$$Kiln = Iline\ (tb) - Iline\ (ta)/(tb - ta) \qquad ...\ (11)$$

$$Isht = Td \cdot Kiln + Iline\ (ta) \qquad ...\ (12)$$

In S120, when predicted current value Isht obtained in the expression (5) is positive (Isht > 0), the direction of current flow is detected as the line direction, whereas when predicted current value Isht is negative (Isht < 0), the direction of current flow can be detected as the bus direction.

By performing processing in S200 by using the direction of current flow detected in accordance with Fig. 19, the number M of circuit breakers to be opened can be determined in accordance with the direction of current flow at timing of actual opening of circuit breaker 110. An overvoltage can thus further reliably be suppressed.

It should be understood that the embodiment disclosed herein is illustrative and non-restrictive in every respect.

The scope of the present disclosure is defined by the terms of the claims rather than the description above and is intended to include any modifications within the scope and meaning equivalent to the terms of the claims.

REFERENCE SIGNS LIST

1A, 1B power transmission system; 10A to 10D HVAC system; 100U, 101 to 10N circuit breaker unit; 15A to 15D AC circuit breaker; 20 power converter; 20A to 20D AC/DC converter; 25 DC reactor; 30, 30X, 31 to 34 electric line; 100, 100A to 100H DC circuit breaker; 105 controller; 110 circuit breaker; 116b, 1161, 116x voltage detector; 117 current detector; 120 arrester; 150 series circuit; CL1 to CL4, CLX1 to CLX4 characteristic line; Iline line current; P1, P2 path; S1 to SN opening command (circuit breaker); Strp interruption command (DC circuit breaker); Vb bus voltage; Vcb voltage across electrodes (DC circuit breaker); Vdcr reactor voltage; Vl line voltage; Vlim limit voltage; Vmax designed upper limit voltage.

**Claims**

1. A DC circuit breaker connected in series to a DC reactor with respect to an electric line, the DC circuit breaker comprising:

   N circuit breaker units connected in series,

   N being an integer not smaller than 2,
   each of the N circuit breaker units comprising a circuit breaker and an arrester connected in parallel;

   first and second voltage detectors to measure a voltage on a bus side and a voltage on an electric line side of a series circuit composed of the DC reactor and the N circuit breaker units; and
   a controller to generate an opening command to open the circuit breaker in each of the N circuit breaker units, wherein
   when the controller senses an interruption command to the DC circuit breaker, the controller controls the circuit breaker of variably set M circuit breaker units among the N circuit breaker units to open based on at least one of the voltage on the bus side and the voltage on the electric line side of the series circuit, and
   the M is an integer not smaller than 1 and not larger than N.

2. The DC circuit breaker according to claim 1, further comprising a current detector to measure a current that flows through the electric line, wherein
   when the controller senses the interruption command, the controller detects a direction of current flow in an interruption operation based on a line current detected by the current detector, and sets, based on one voltage on a downstream side in the detected direction of current flow, of the voltage on the bus side and the voltage on the electric line side, a value of the M to a larger value as the one voltage is lower and sets the M to a smaller value as the one voltage is higher.

3. The DC circuit breaker according to claim 2, wherein
   when the direction of current flow is a direction from the DC reactor toward the DC circuit breaker, the controller determines the value of the M based on the one voltage such that the M is set to a maximum value within a range where a voltage at a connection node of the DC reactor and the N circuit breaker units at time of opening of the M circuit breaker units is not higher than a first allowable upper limit voltage and an absolute value of a reactor voltage across opposing ends of the DC reactor at the time of opening of the M circuit breaker units is not higher than a second allowable upper limit voltage.

4. The DC circuit breaker according to claim 3, wherein
   when the direction of current flow is the direction from the DC reactor toward the DC circuit breaker, the controller sets the value of the M based on the one voltage to a minimum value of a first number and a second number, the first number being the maximum value of the M within the range where the voltage at the connection node is not higher than the first allowable upper limit voltage at the time of opening of the M circuit breaker units, the second number being the maximum value of the M within the range where the absolute value of the reactor voltage is not higher than the second allowable upper limit voltage at the time of opening of the M circuit breaker units.

5. The DC circuit breaker according to claim 2, wherein

when the direction of current flow is the direction from the DC circuit breaker toward the DC reactor, the controller determines the value of the M based on the one voltage such that the M is set to a maximum value within a range where an absolute value of a reactor voltage across opposing ends of the DC reactor at time of opening of the M circuit breaker units is not higher than an allowable upper limit voltage.

6. The DC circuit breaker according to claim 2, wherein
when the controller senses the interruption command, the controller detects a direction of current flow in an interruption operation based on a direction of the line current detected by the current detector, and switches a logic to determine a value of the M based on the one voltage in accordance with combination of first information and second information, the first information being information about which of the bus and the electric line is located on a downstream side in the direction of current flow, the second information indicating whether the direction of current flow is a direction from the DC circuit breaker toward the DC reactor or a direction from the DC reactor toward the DC circuit breaker.

7. The DC circuit breaker according to any one of claims 2 to 6, wherein
the controller calculates a rate of change of the line current based on a first detection value obtained by the current detector at a time point of sensing of the interruption command and a second detection value obtained by the current detector after the time point of sensing, calculates a predicted current value at a time point of actual opening of the circuit breaker in response to the interruption command based on the first detection value and the rate of change, and detects the direction of current flow in accordance with the calculated predicted current value.

8. The DC circuit breaker according to claim 1, wherein
as a voltage difference between the bus side and the electric line side of the series circuit detected by the first and second voltage detectors at time of sensing of the interruption command is larger, the controller sets the M to a larger value, and as the voltage difference is smaller, the controller sets the M to a smaller value.

9. The DC circuit breaker according to any one of claims 1 to 8, wherein
the controller sets the M to a larger value in generation of the interruption command to interrupt a fault current than in generation of the interruption command to interrupt a current while a fault is not occurring.

FIG.1

1A

FIG.2

1B

FIG.3

FIG.4

FIG.5

FIG.6

FIG.7A

FIG.7B

FIG.7C

# FIG.8

(a) IN INTERRUPTION OF FAULT CURRENT    (b) IN INTERRUPTION OF LOAD CURRENT

FIG.9

(a) IN INTERRUPTION OF FAULT CURRENT    (b) IN INTERRUPTION OF LOAD CURRENT

FIG.10

150

Vcb (DIRECTION IN POSITIVE
ELECTRODE INTERRUPTION)

20 ←    Vb    25   Nx    101    102    10N    117    Vl ⟶ 30

116b    116x    Vx

Vb#     S1     S2      Iline    116l    Vl#

Vx#        SN

CONTROLLER      ← Strp

105

100

FIG.11

START

NO ← **S100** HAS INTERRUPTION COMMAND BEEN SENSED?

YES   **S110** OBTAIN CURRENT · VOLTAGE INFORMATION

**S120** DETECT DIRECTION OF CURRENT FLOW

**S200**

**S210** DIRECTION OF CURRENT FLOW = LINE DIRECTION?    NO (BUS DIRECTION)

YES   **S220**
DETERMINE M (THE NUMBER OF CIRCUIT BREAKERS TO BE OPENED) IN POSITIVE ELECTRODE INTERRUPTION (INTERRUPTION OF CURRENT FROM BUSSIDE → LINE SIDE):FIGs. 12 AND 13

**S230**
DETERMINE M (THE NUMBER OF CIRCUIT BREAKERS TO BE OPENED) IN NEGATIVE ELECTRODE INTERRUPTION (INTERRUPTION OF CURRENT FROM LINESIDE → BUS SIDE): FIG. 14

RETURN

FIG.12

FIG.13

FIG.14

FIG.15A

FIG.15B

FIG.15C

FIG.15D

## FIG.16

## FIG.17

FIG.18

FIG.19

## INTERNATIONAL SEARCH REPORT

International application No.

**PCT/JP2023/010299**

### A. CLASSIFICATION OF SUBJECT MATTER

***H01H 9/54***(2006.01)i; ***H02H 3/087***(2006.01)i; ***H01H 33/59***(2006.01)i; ***H02J 1/00***(2006.01)i
FI:   H01H33/59 C; H02J1/00 301D; H02H3/087; H01H9/54 E

According to International Patent Classification (IPC) or to both national classification and IPC

### B. FIELDS SEARCHED

Minimum documentation searched (classification system followed by classification symbols)

H01H9/54; H02H3/087; H01H33/59; H02J1/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | US 2014/0022680 A1 (ABB TECHNOLOGY AG) 23 January 2014 (2014-01-23) | 1-2, 8-9 |
| A | paragraphs [0054]-[0095], [0106]-[0115], fig. 3, 4a, 5-7, 9-10 | 3-7 |
| A | WO 2015/121983 A1 (MITSUBISHI ELECTRIC CORPORATION) 20 August 2015 (2015-08-20) | 1-9 |
| A | WO 2014/132396 A1 (MITSUBISHI ELECTRIC CORPORATION) 04 September 2014 (2014-09-04) | 1-9 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **23 May 2023** | **06 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/010299**

| Patent document cited in search report | | | Publication date (day/month/year) | Patent family member(s) | | | Publication date (day/month/year) |
|---|---|---|---|---|---|---|---|
| US | 2014/0022680 | A1 | 23 January 2014 | EP | 2684267 | A2 | |
| | | | | CN | 103403990 | A | |
| WO | 2015/121983 | A1 | 20 August 2015 | US | 2017/0163170 | A1 | |
| | | | | EP | 3107172 | A1 | |
| WO | 2014/132396 | A1 | 04 September 2014 | (Family: none) | | | |

Form PCT/ISA/210 (patent family annex) (January 2015)

**EP 4 682 921 A1**

**Patent documents cited in the description**

- JP 62113326 A